# EUROPÄISCHE PATENTSCHRIFT

(11) **EP 3 119 245 B1**
(45) Veröffentlichungstag und Bekanntmachung des Hinweises auf die Patenterteilung: **19.08.2020**
(21) Anmeldenummer: 15720572.5
(22) Anmeldetag: 19.03.2015
(51) Int. Cl.: A47J 31/00, A47J 31/18, A47J 31/06, B65D 85/804

(54) **VERFAHREN, AUFGUSSBEHÄLTER UND ZUBEREITUNGSVORRICHTUNG FÜR DIE ZUBEREITUNG EINES AUFGUSSGETRÄNKS**
METHOD, INFUSION CONTAINER AND PREPARATION APPARATUS FOR PREPARING AN INFUSION BEVERAGE
PROCÉDÉ, RÉCIPIENT D'INFUSION ET DISPOSITIF DE PRÉPARATION D'UNE BOISSON PAR INFUSION

(30) Priorität: 21.03.2014 CH 436142014
(43) Veröffentlichungstag der Anmeldung: 25.01.2017
(73) Patentinhaber: Arco Design GmbH, 4663 Aarburg (CH)
(72) Erfinder: DEL BON, Roberto, CH-4663 Aarburg (CH); DEL BON, Franco, CH-4663 Aarburg (CH); WÜST, Theodor, CH-8630 Rüti (CH); ANDERSON, Mark, CH-8810 Horgen (CH); DEJAKUM, Roger, CH-8623 Wetzikon (CH); KELLER, Daniel, F., CH-8712 Stäfa (CH); LOCHER, Christian, CH-8004 Zürich (CH)
(74) Vertreter: Bohest AG Branch Ostschweiz
(86) Internationale Anmeldenummer: PCT/CH2015/000045
(87) Internationale Veröffentlichungsnummer: WO 2015/139150

(56) Entgegenhaltungen:
- EP-B1- 1 315 437
- WO-A1-99/05036
- WO-A1-2007/090391
- US-B1- 6 186 051

## Beschreibung

Die Erfindung betrifft ein Verfahren zur Zubereitung eines Aufgussgetränks, einen für die Durchführung des Verfahrens geeigneten Aufgussbehälter und eine zum Einsatz eines solchen Aufgussbehälters bzw. zur Durchführung des Verfahrens ausgebildete Zubereitungsvorrichtung für die Herstellung eines Aufgussgetränks.

Unter Aufgussgetränk wird im Zusammenhang mit der vorliegenden Erfindung jede Art von Getränk verstanden, das ausgehend von einer Aufgusstrockensubstanz durch Kontaktierung mit einer kalten oder heissen Aufgussflüssigkeit zubereitet werden kann. Ein typisches Aufgussgetränk ist z.B. Tee, der durch Aufbrühen von Teeblättern oder Kräutern mit heissem Wasser zubereitet wird.

Bei einer klassischen Art von bekannten automatischen Teezubereitungsvorrichtungen werden Beutel aus flüssigkeitsdurchlässigem Material eingesetzt, in denen abgemessene Mengen von Teeblättern bereitgestellt werden. Die Teebeutel werden in der Vorrichtung geeignet fixiert und dann unter Druck von üblicherweise heissem Wasser durchströmt. Es sind auch schon Teezubereitungsvorrichtungen bekannt, bei denen flüssigkeitsdichte Behälterkapseln mit jeweils einer abgemessenen Menge von Teeblättern eingesetzt werden. In diesen Teezubereitungsvorrichtungen werden die Behälterkapseln perforiert und erst dann von heissem Wasser durchströmt. Beide Arten der bekannten Teezubereitungsvorrichtungen arbeiten in einem raschen Durchflussverfahren, wobei die Zeit, während der die Teeblätter mit dem Wasser in Kontakt stehen, sehr kurz ist.

Ein Aufgussbehälter ist aus WO-A-99/05036 bekannt.

Es ist bekannt, dass verschiedene Teesorten zur optimalen Entfaltung ihres Aromas ein vergleichsweise längeres Brühen von einigen Minuten Dauer erfordern. Die Kontaktzeit zwischen den Teeblättern und dem Brühwasser muss daher ausreichend lang sein. Dies ist bei den bekannten Teezubereitungsvorrichtungen nicht der Fall.

Durch die vorliegende Erfindung soll ein zur Durchführung in einer automatischen Zubereitungsvorrichtung geeignetes Verfahren zur Zubereitung eines Aufgussgetränks geschaffen werden, bei welchem eine ausreichend lange Kontaktzeit zwischen der Aufgusstrockensubstanz und der Aufgussflüssigkeit gewährleistet ist.

Die Lösung dieser der Erfindung zugrundeliegenden Aufgabe besteht im erfindungsgemässen Zubereitungsverfahren, wie es im kennzeichnenden Teil des unabhängigen Anspruchs 1 charakterisiert ist.

Das Wesen des erfindungsgemässen Verfahrens besteht in einem Verfahren zur Zubereitung eines Aufgussgetränks, wobei eine abgemessene Menge einer Aufgusstrockensubstanz mit einer abgemessenen Menge einer Aufgussflüssigkeit in Kontakt gebracht wird und dadurch das Aufgussgetränk entsteht. Die Aufgusstrockensubstanz wird in einem Aufgussbehälter bereitgestellt, welcher zunächst in einer kollabierten Gestalt vorliegt und in eine expandierte Gestalt ausdehnbar ist. Die Aufgussflüssigkeit wird in den Aufgussbehälter eingebracht, wobei der Aufgussbehälter expandiert wird. Die Aufgusstrockensubstanz wird im Aufgussbehälter zur Bildung des Aufgussgetränks während einer Kontaktierungsdauer mit der Aufgussflüssigkeit in Kontakt gehalten. Der Aufgussbehälter wird dann durch Zusammendrücken zumindest teilweise in seine kollabierte Gestalt zurückgeführt und dabei das Aufgussgetränk mindestens teilweise aus dem Aufgussbehälter ausgetrieben.

Gemäss dem Hauptgedanken der Erfindung erfolgt die Zubereitung des Aufgussgetränks, das heisst die Kontaktierung der Aufgusstrockensubstanz mit der Aufgussflüssigkeit, in einem expandierbaren Aufgussbehälter, der die Aufgusstrockensubstanz bereits enthält und in den die Aufgussflüssigkeit eingebracht wird, wobei sich der Aufgussbehälter entsprechend ausdehnt. Dadurch kann eine den Erfordernissen entsprechend lange Kontaktzeit zwischen der Aufgusstrockensubstanz und der Aufgussflüssigkeit erreicht werden.

Eine weitere Aufgabe der Erfindung besteht in der Bereitstellung eines Aufgussbehälters, der für die Durchführung des erfindungsgemässen Verfahrens geeignet ist.

Die Lösung dieser weiteren Aufgabe der Erfindung besteht im erfindungsgemässen Aufgussbehälter, wie er im unabhängigen Anspruch 2 charakterisiert ist. Bevorzugte Ausführungsformen und Weiterbildungen des erfindungsgemässen Aufgussbehälters sind Gegenstand der jeweils abhängigen Ansprüche.

Das Wesen des erfindungsgemässen Aufgussbehälters besteht in Folgendem: Ein Aufgussbehälter zur Aufnahme einer Aufgusstrockensubstanz für die Zubereitung eines Aufgussgetränks, insbesondere zur Durchführung des erfindungsgemässen Verfahrens, ist zur Aufnahme einer Aufgussflüssigkeit flüssigkeitsdicht ausgebildet. Ferner ist er dazu ausgebildet, durch Einbringung von Aufgussflüssigkeit von einer kollabierten Gestalt in eine expandierte Gestalt ausgedehnt zu werden. Und weiter ist er mit einem sich bei Überschreiten eines Überdrucks im Aufgussbehälter öffnenden Auslassventil ausgestattet. Der Aufgussbehälter weist ein Bodenteil und ein Deckelteil und dazwischen ein expandierbares Wandteil auf, wobei das Auslassventil im Bodenteil angeordnet ist. Das expandierbare Wandteil kann dabei faltenbalgartig oder elastisch dehnbar oder stülpbar ausgebildet sein.

Vorteilhafterweise ist dabei das Deckelteil durchstechbar ausgebildet.

Zweckmässigerweise besteht der Aufgussbehälter aus einem lebensmittelverträglichen Material, beispielsweise etwa Aluminium. Der Aufgussbehälter kann auch zumindest teilweise aus einem transparenten und/ oder einem biologisch abbaubaren Material bestehen.

Eine weitere Aufgabe der Erfindung besteht in der Bereitstellung einer Zubereitungsvorrichtung, die für die Durchführung des erfindungsgemässen Verfahrens geeignet ist.

Die Lösung dieser weiteren Aufgabe der Erfindung besteht in der erfindungsgemässen Zubereitungsvorrichtung, wie sie im unabhängigen Anspruch 5 charakterisiert ist. Bevorzugte Ausführungsformen und Weiterbildungen der erfindungsgemässen Zubereitungsvorrichtung sind Gegenstand der jeweils abhängigen Ansprüche.

Das Wesen der erfindungsgemässen Zubereitungsvorrichtung besteht in Folgendem: Ein System zur Zubereitung eines Aufgussgetränks, insbesondere zur Durchführung des erfindungsgemässen Verfahrens, weist eine Zubereitungsvorrichtung und einen darin einsetzbaren Aufgussbehälter auf. Die Zubereitungseinrichtung weist eine Halterung für einen eine Aufgusstrockensubstanz enthaltenden Aufgussbehälter, ein Reservoir für eine Aufgussflüssigkeit, Einfüllmittel zum Einbringen einer dosierten Menge von Aufgussflüssigkeit aus dem Reservoir in den Aufgussbehälter und einen Auslass zum Abführen von zubereitetem Aufgussgetränk aus dem Aufgussbehälter auf. Der Aufgussbehälter ist zur Aufnahme einer Aufgussflüssigkeit flüssigkeitsdicht ausgebildet und ferner dazu, durch Einbringung von Aufgussflüssigkeit von einer kollabierten Gestalt in eine expandierte Gestalt ausgedehnt zu werden, und ist weiter mit einem sich bei Überschreiten eines Überdrucks im Aufgussbehälter öffnenden Auslassventil ausgestattet, wobei der Auslass mit dem Auslassventil des Aufgussbehälters kommuniziert. Die Einfüllmittel weisen eine beweglich antreibbare Füllnadel zum Durchstechen des Aufgussbehälters auf. Ferner sind Auspressmittel vorgesehen, welche dazu ausgebildet sind, den Aufgussbehälter zusammenzudrücken und dadurch das im Aufgussbehälter befindliche zubereitete Aufgussgetränk aus dem Aufgussbehälter durch das Auslassventil in den Auslass zu entleeren.

Vorteilhafterweise weist die Zubereitungsvorrichtung vorzugsweise als Durchlauferhitzer ausgebildete Heizmittel zur Erhitzung der in den Aufgussbehälter einzubringenden Aufgussflüssigkeit auf.

Zweckmässigerweise ist die Zubereitungsvorrichtung mit einer elektronischen Steuerung für die Einfüllmittel und die Auspressmittel ausgestattet.

Vorteilhafterweise weist die Steuerung Bedienorgane auf, mittels welcher manuell eine gewünschte Kontaktierungsdauer zwischen Aufgusstrockensubstanz und Aufgussflüssigkeit im Aufgussbehälter kontinuierlich oder stufenweise einstellbar ist, und ist die Steuerung dazu ausgebildet, die Auspressmittel nach Verstreichen der eingestellten Kontaktierungsdauer zu aktivieren.

Vorteilhafterweise weist die Steuerung Bedienorgane auf, mittels welcher manuell eine gewünschte Menge in den Aufgussbehälter einzufüllende Aufgussflüssigkeit kontinuierlich oder stufenweise einstellbar ist, und ist die Steuerung dazu ausgebildet, die eingestellte Menge Aufgussflüssigkeit in den Aufgussbehälter einzufüllen.

Gemäss einer weiteren Ausgestaltung sind die Aufgussbehälter mit einem Informationsträger und die Zubereitungsvorrichtung mit einem mit der Steuerung zusammenarbeitenden Sensor zum Auslesen des Informationsträgers versehen, wobei der Informationsträger Angaben über Aufgussflüssigkeitsmenge, Temperatur und/oder Kontaktdauer enthält und die Steuerung dazu ausgebildet ist, den Zubereitungsprozess aufgrund dieser Angaben zu steuern.

Im Folgenden wird die Erfindung anhand der Zeichnung näher erläutert. Es zeigen:
- Fig. 1: eine Schnittdarstellung eines Ausführungsbeispiels eines erfindungsgemässen Aufgussbehälters im kollabierten Ausgangszustand;
- Fig. 2: eine schematische Gesamtdarstellung der erfindungsgemässen Zubereitungsvorrichtung und
- Fig. 3-8: je eine schematische Teildarstellung eines Ausführungsbeispiels der erfindungsgemässen Zubereitungsvorrichtung in sechs charakteristischen Phasen des erfindungsgemässen Verfahrens.

Im Folgenden wird die Erfindung anhand des typischen Anwendungsbeispiels der Zubereitung von Tee erläutert, wobei eine Aufgusstrockensubstanz in Form von Teeblättern und eine Aufgussflüssigkeit in Form von üblicherweise heissem Wasser zum Einsatz kommt.

Die für die Zubereitung des Aufgussgetränks, im Beispiel also Tees, erforderliche Aufgusstrockensubstanz, also Teeblätter, wird in einem speziellen Aufgussbehälter bereitgestellt.

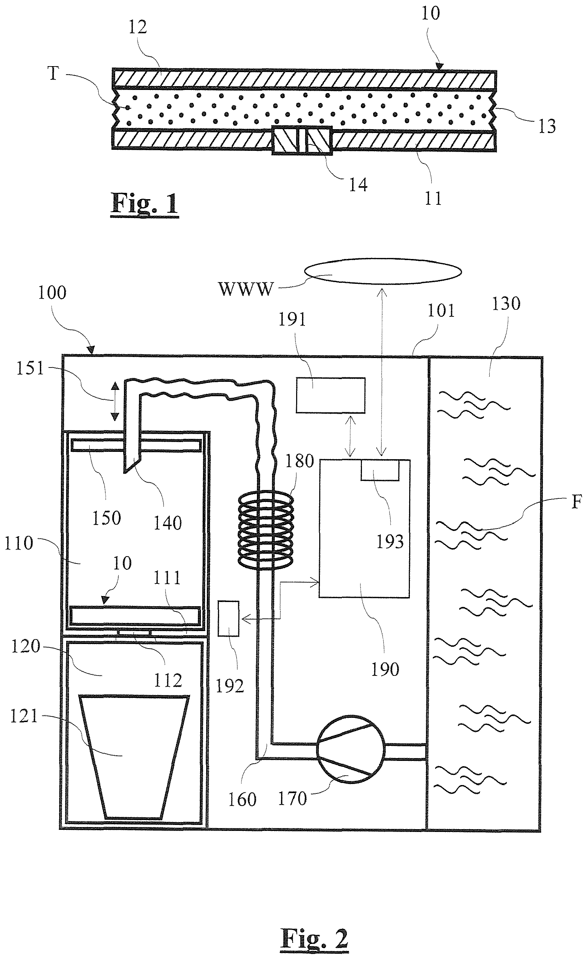

Der in Fig. 1 dargestellte, als Ganzer mit 10 bezeichnete, flüssigkeitsdicht ausgebildete Aufgussbehälter besteht aus einem im Wesentlichen ebenen, scheibenförmigen Bodenteil 11, einem ebenfalls im Wesentlichen ebenen, scheibenförmigen Deckelteil 12 und einem das Bodenteil 11 und das Deckelteil 12 verbindenden, faltenbalgartig ausgebildeten Wandteil 13. Im Zentrum des Bodenteils 11 ist ein Auslassventil 14 angeordnet, welches als Überdruckventil ausgebildet ist, das sich bei Überschreitung eines vorgegebenen Innendrucks im Aufgussbehälter öffnet und sich bei einem niedrigeren Innendruck wieder schliesst. Im Aufgussbehälter 10 befindet sich eine abgemessene Menge einer Aufgusstrockensubstanz T, hier im Beispiel also Teeblätter.

In Fig. 1 ist der Aufgussbehälter 10 in seinem kollabierten Ausgangszustand dargestellt, bei welchem das Bodenteil 11 und das Deckelteil 12 relativ nahe beieinander liegen, der Aufgussbehälter also eine relativ flache Gestalt aufweist. In diesem kollabierten Ausgangszustand bzw. kollabierten Ausgangsgestalt entspricht der Aufgussbehälter 10 im Wesentlichen einem herkömmlichen Teebeutel.

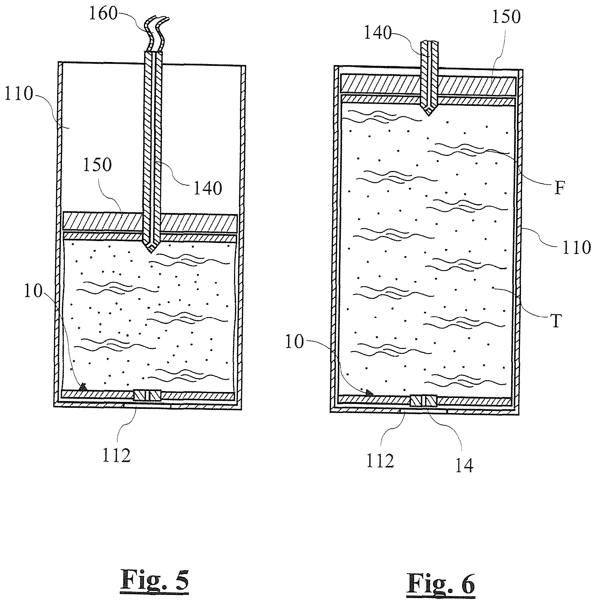

Ein wesentliches Merkmal des erfindungsgemässen Aufgussbehälters 10 ist, dass der Aufgussbehälter von seiner kollabierten Ausgangsgestalt in einen expandierten Zustand bzw. eine expandierte Gestalt ausdehnbar ausgebildet ist, wobei das Fassungsvermögen bzw. Volumen des Aufgussbehälters 10 im expandierten Zustand ein Vielfaches des Volumens in seinem kollabierten Zustand beträgt. Erreicht wird diese Ausdehnbarkeit des Aufgussbehälters 10 durch die faltenbalgartige Ausbildung seines Wandteils 13. Die Ausdehnung bzw. Aufblähung des Aufgussbehälters 10 von seiner kollabierten Ausgangsgestalt in seine expandierte Gestalt erfolgt, wie weiter unten noch näher erläutert wird, durch Einleitung von Aufgussflüssigkeit in den Aufgussbehälter 10. Dabei dehnt sich der Aufgussbehälter 10 in axialer Richtung ähnlich wie ein zylindrischer Lampion aus. In Fig. 6 ist der Aufgussbehälter 10 in voll expandiertem Zustand gezeigt.

Der Aufgussbehälter 10 besteht aus einem lebensmittelverträglichen Material, beispielsweise etwa Aluminium, das ggf. auch beschichtet sein kann. Der Aufgussbehälter 10 kann aber auch zumindest teilweise aus einem biologisch abbaubaren Material bestehen oder auch ganz oder teilweise transparent ausgebildet sein. Je nach verwendeten Materialien bleibt der Aufgussbehälter 10 von selbst in seiner kollabierten Gestalt. Er kann aber auch mit aufbrechbaren Haltemitteln versehen sein, um ihn in seiner kollabierten Gestalt zu halten. Diese Haltemittel würden dann bei der Befüllung mit Aufgussflüssigkeit aufbrechen.

Die Expandierbarkeit des Ausgussbehälters 10 kann auch dadurch erreicht werden, dass das Wandteil zwischen dem Bodenteil und dem Deckelteil anstatt faltenbalgartig elastisch dehnbar oder stülpbar ausgebildet ist.

In Fig. 2 ist schematisch eine Zubereitungsvorrichtung für ein Aufgussgetränk dargestellt, in welcher Aufgussbehälter 10 der eben beschriebenen Art zum Einsatz kommen.

Die als Ganze mit 100 bezeichnete Zubereitungsvorrichtung umfasst in einem Gehäuse 101 einen Zubereitungszylinder 110, unter diesem einen Aufnahmeraum 120 für ein Aufnahmegefäss 121 für fertig zubereitetes Aufgussgetränk, ein Reservoir 130 für eine Aufgussflüssigkeit F, eine Füllnadel 140, einen Auspresskolben 150, eine das Reservoir 130 mit der Füllnadel 140 verbindende, teilweise flexible Flüssigkeitsleitung 160, eine Flüssigkeitspumpe 170, einen Durchlauferhitzer 180 und eine elektronische Steuerung 190 mit Bedienungsorganen 191. Die Füllnadel 140 und der Auspresskolben 150 sind zusammen mittels eines nur durch einen Doppelpfeil 151 symbolisierten motorischen Antriebs im Zubereitungszylinder 110 abwärts und aufwärts bewegbar. Die Steuerung 190 steuert die Bewegung der Füllnadel 140 und des Auspresskolbens 150 sowie die Flüssigkeitspumpe 170 und den Durchlauferhitzer 180. Weitere Details ergeben sich aus der nachfolgenden Beschreibung der Betriebsweise der Zubereitungsvorrichtung.

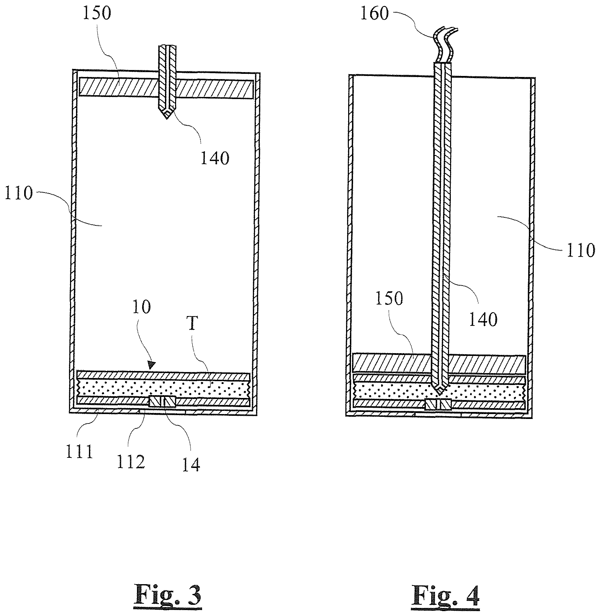

Ausgehend von einem weiter oben beschriebenen, mit Teeblättern bzw. allgemein Aufgusstrockensubstanz gefüllten Aufgussbehälter 10 verläuft das erfindungsgemässe Zubereitungsverfahren für ein Aufgussgetränk in der eben beschriebenen Zubereitungsvorrichtung wie folgt:
In einem vorbereitenden Schritt (Figuren 2 und 3) wird der sich noch in seinem kollabierten Ausgangszustand befindliche Aufgussbehälter 10 durch ein nicht dargestelltes Zugangsfenster in den Zubereitungszylinder 110 der Zubereitungsvorrichtung 100 eingebracht. Der Zubereitungszylinder 110 weist einen Boden 111 auf, in welchem sich eine Öffnung 112 befindet, die einen Auslass für das zubereitete Aufgussgetränk bildet. Der Aufgussbehälter 10 liegt auf dem Boden111 auf, letzterer bildet somit eine Halterung für den Aufgussbehälter 10. Die Auslassöffnung 112 befindet sich bei in den Zubereitungszylinder 110 eingebrachtem Aufgussbehälter 10 unterhalb dessen Auslassventils 14, so dass sie mit diesem kommuniziert.

Nach einem mittels der Bedienungsorgane 191 der Steuerung 190 mitgeteilten Startbefehl veranlasst die Steuerung 190 die Verstellung der Füllnadel 140 und des Auspresskolbens 150 soweit nach unten auf den Aufgussbehälter 10 zu, bis die Füllnadel 140 das Deckelteil 12 des Aufgussbehälters 10 durchsticht, wobei das Deckelteil 12 des Aufgussbehälters 10 natürlich so ausgebildet ist, dass es von der Füllnadel 140 durchstochen werden kann. Der Auspresskolben 150 liegt dabei am Deckelteil 12 auf (Fig. 4).

Im nächsten Schritt veranlasst die Steuerung 190, dass eine abgemessene Menge Aufgussflüssigkeit F aus dem Reservoir 130 über die Leitung 160 durch die Füllnadel 140 in den Aufgussbehälter 10 gepumpt wird. Dadurch wird der Aufgussbehälter 10 allmählich in axialer Richtung expandiert, bis er schliesslich seine voll expandierte Gestalt erreicht. Während der Expansion des Aufgussbehälters 10 werden die Füllnadel 140 und der Auspresskolben 150 der Expansion des Aufgussbehälters 10 folgend nach oben verschoben. Dies kann aktiv durch die Steuerung 190 oder passiv durch den expandierenden Aufgussbehälter 10 erfolgen. Die Fig. 5 zeigt den Aufgussbehälter 10 etwa zur Hälfte expandiert, die Fig. 6 zeigt den Aufgussbehälter 10 in seiner voll expandierten Gestalt.

Damit während der Befüllung des Aufgussbehälters 10 keine Aufgussflüssigkeit aus dem Aufgussbehälter 10 austreten und den umgebenden Zubereitungszylinder 110 kontaminieren kann, ist es wichtig, dass die Füllnadel 140 das Deckelteil 12 des Aufgussbehälters 10 dichtend durchsticht oder dass sonstige Dichtmittel (z.B. ein O-Ring) vorgesehen sind, welche die Einstichstelle abdichten.

Während der Füllung des Aufgussbehälters 10 mit Aufgussflüssigkeit F und während einer darauf folgenden Zeitspanne erfolgt im Aufgussbehälter 10 die Kontaktierung der Aufgusstrockensubstanz T mit der Aufgussflüssigkeit F, wobei dann schliesslich im Aufgussbehälter 10 das fertige Aufgussgetränk entsteht. Im Zusammenhang mit der Zubereitung von Tee wird die Phase nach dem Einfüllen des Wassers in den Aufgussbehälter auch als Ziehen bezeichnet.

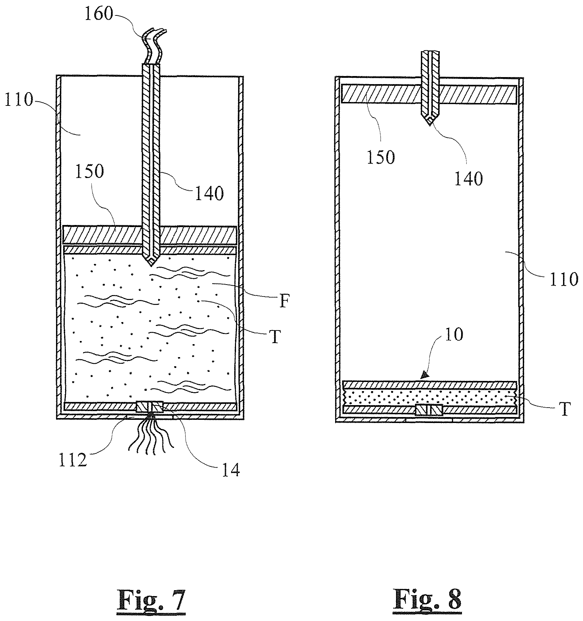

Nach Ablauf der genannten Zeitspanne wird das fertige Aufgussgetränk aus dem Aufgussbehälter 10 entnommen. Dazu veranlasst die Steuerung 190, dass der Auspresskolben 150 (zusammen mit der Füllnadel 140) nach unten bewegt wird. Dabei drückt der Auspresskolben 150 auf das Deckelteil 12 des Aufgussbehälters 10 und staucht diesen. Dadurch wiederum entsteht im Inneren des Aufgussbehälters 10 ein erhöhter Innendruck, der dazu führt, dass sich das Auslassventil 14 im Bodenteil 11 öffnet, so dass das fertige Aufgussgetränk durch das Auslassventil 14 und den Auslass 112 aus dem Aufgussbehälter 10 ausgetrieben wird und sich ohne mit der Zubereitungsvorrichtung selbst in Berührung zu kommen in das Aufnahmegefäss 121 ergiesst. Die Aufgusstrockensubstanz, hier also die Teeblätter, verbleibt dabei im Aufgussbehälter. Die Fig. 7 veranschaulicht die Situation während der Entleerung des Aufgussbehälters 10.

Wenn das Aufgussgetränk vollständig aus dem Aufgussbehälter 10 ausgetrieben ist, nimmt dieser wieder seine ursprüngliche, kollabierte Ausgangsgestalt an. Der Auspresskolben 150 und die Füllnadel 140 werden dann noch in einem abschliessenden Schritt in ihre ursprüngliche Positionen verfahren (Fig. 8).

Mit diesen Schritten ist ein vollständiger Zyklus des erfindungsgemässen Zubereitungsverfahrens abgeschlossen. Nun kann der Zyklus entweder mit einem frischen oder, falls gewünscht, mit demselben Aufgussbehälter wiederholt werden. Letztlich wird dann der Aufgussbehälter 10 entweder manuell aus der Zubereitungsvorrichtung 100 entnommen oder über nicht dargestellte Ausstossmittel automatisch ausgestossen oder in einen Auffangbehälter ausgestossen werden.

Die Steuerung 190 ist so ausgebildet, dass die Kontaktierungsdauer, während der die Aufgusstrockensubstanz T im Aufgussbehälter 10 mit der Aufgussflüssigkeit F in Berührung ist bzw. bleibt, über die Bedienorgane 191 kontinuierlich oder in Stufen einstellbar ist. Ebenso kann die Steuerung 190 dahingehend ausgebildet sein, dass über ihre Bedienungsorgane 191 die Menge von in den Aufgussbehälter 10 zugeführter Aufgussflüssigkeit F kontinuierlich oder stufenweise eingestellt werden kann. Ferner kann die Steuerung 190 auch dahingehend ausgebildet sein, dass über ihre Bedienungsorgane 191 die Temperatur, auf welche der Durchlauferhitzer 180 die Aufgussflüssigkeit erhitzt, kontinuierlich oder stufenweise eingestellt werden kann. Mit variabler Kontaktierungsdauer und variabler Menge Aufgussflüssigkeit und ggf. variabler Temperatur der Aufgussflüssigkeit lässt sich die Zubereitung des Aufgussgetränks optimieren bzw. auf den persönlichen Geschmack einstellen.

Gemäss einem weiteren Aspekt der Erfindung kann der Aufgussbehälter 10 auch mit einem Informationsträger versehen sein, der Angaben über z.B. die optimale Menge Aufgussflüssigkeit und/oder die optimale Temperatur der Aufgussflüssigkeit und/oder die optimale Kontaktierungsdauer enthalten kann. In der Zubereitungsvorrichtung kann dann ein mit der Steuerung 190 zusammenarbeitender Sensor 191 vorgesehen sein, der die auf dem Informationsträger enthaltenen Angaben auslesen kann, wobei dann die Steuerung 190 den Zubereitungsprozess entsprechend diesen Angaben selbsttätig steuern würde. Als Informationsträger kämen beispielsweise Strichcodes oder RFID-Elemente in Frage.

Gemäss einem weiteren Aspekt der Erfindung kann die Steuerung 190 auch über Mittel 193 verfügen, die sie an das Internet WWW anbinden und eine Bedienung bzw. Fernsteuerung über dieses ermöglichen.

Das erfindungsgemässe Zubereitungsverfahren kann selbstverständlich sinngemäss auch ohne die eben beschriebene Zubereitungsvorrichtung durchgeführt werden.

Vorstehend wurde die Erfindung im Zusammenhang mit der Zubereitung von Tee erläutert. Das erfindungsgemässe Verfahren und die erfindungsgemässe Zubereitungsvorrichtung kann jedoch sinngemäss auch für die Zubereitung anderer Getränke eingesetzt werden, welche durch Kontaktierung einer Aufgusstrockensubstanz mit Aufgussflüssigkeit herstellbar sind. Die Aufgusstrockensubstanz kann dabei auch in der Aufgussflüssigkeit löslich sein, wobei unter Kontaktierung sinngemäss der Lösungsprozess der Aufgusstrockensubstanz in der Aufgussflüssigkeit zu verstehen ist.

## Patentansprüche

1. Verfahren zur Zubereitung eines Aufgussgetränks, wobei eine abgemessene Menge einer Aufgusstrockensubstanz (T) mit einer abgemessenen Menge einer Aufgussflüssigkeit (F) in Kontakt gebracht wird und dadurch das Aufgussgetränk entsteht, **dadurch gekennzeichnet, dass** die Aufgusstrockensubstanz (T) in einem Aufgussbehälter (10) bereitgestellt wird, welcher zunächst in einer kollabierten Gestalt vorliegt und in eine expandierte Gestalt ausdehnbar ist, dass die Aufgussflüssigkeit (F) in den Aufgussbehälter (10) eingebracht wird, wobei der Aufgussbehälter (10) expandiert wird, dass die Aufgusstrockensubstanz (T) im Aufgussbehälter (10) zur Bildung des Aufgussgetränks während einer Kontaktierungsdauer mit der Aufgussflüssigkeit in Kontakt gehalten wird, und dass dann der Aufgussbehälter (10) durch Zusammendrücken zumindest teilweise in seine kollabierte Gestalt zurückgeführt wird und dabei das Aufgussgetränk mindestens teilweise aus dem Aufgussbehälter (10) ausgetrieben wird.

2. Aufgussbehälter zur Aufnahme einer Aufgusstrockensubstanz für die Zubereitung eines Aufgussgetränks, zur Durchführung des Verfahrens nach Anspruch 1, wobei der Aufgussbehälter zur Aufnahme einer Aufgussflüssigkeit (F) flüssigkeitsdicht ausgebildet und durch Einbringung von Aufgussflüssigkeit (F) von einer kollabierten Gestalt in eine expandierte Gestalt ausdehnbar ist und mit einem sich bei Überschreiten eines Überdrucks im Aufgussbehälter (10) öffnenden Auslassventil (14) ausgestattet ist, **dadurch gekennzeichnet, dass** er ein Bodenteil (11) und ein Deckelteil (12) und dazwischen ein expandierbares Wandteil (13) aufweist und das Auslassventil im Bodenteil (11) angeordnet ist.

3. Aufgussbehälter nach Anspruch 2, **dadurch gekennzeichnet, dass** das Deckelteil (12) durchstechbar ausgebildet ist.

4. Aufgussbehälter nach Anspruch 2 oder 3, **dadurch gekennzeichnet, dass** er aus einem lebensmittelverträglichen Material besteht.

5. System zur Zubereitung eines Aufgussgetränks, zur Durchführung des Verfahrens nach Anspruch 1, bestehend aus einer Zubereitungsvorrichtung und einem in die Zubereitungsvorrichtung einsetzbaren Aufgussbehälter gemäss einem der Ansprüche 2 bis 4, wobei die Zubereitungsvorrichtung eine Halterung (111) für den eine Aufgusstrockensubstanz enthaltenden Aufgussbehälter (10), ein Reservoir (130) für eine Aufgussflüssigkeit (F), Einfüllmittel (140, 160, 170) zum Einbringen einer dosierten Menge von Aufgussflüssigkeit (F) aus dem Reservoir (130) in den Aufgussbehälter (10) und einen Auslass (112) zum Abführen von zubereitetem Aufgussgetränk aus dem Aufgussbehälter (10) aufweist, welcher Auslass (112) mit dem Auslassventil (14) des Aufgussbehälters (10) kommuniziert, wobei die Einfüllmittel eine beweglich antreibbare Füllnadel (140) zum Durchstechen des Aufgussbehälters (10) aufweisen und wobei Auspressmittel (150) vorgesehen sind, welche dazu ausgebildet sind, den Aufgussbehälter (10) zusammenzudrücken und dadurch das im Aufgussbehälter (10) befindliche zubereitete Aufgussgetränk aus dem Aufgussbehälter (10) durch das Auslassventil (14) in den Auslass (112) entleerbar ist.

6. System nach Anspruch 5, **dadurch gekennzeichnet, dass** die Zubereitungsvorrichtung als Durchlauferhitzer ausgebildete Heizmittel (180) zur Erhitzung der in den Aufgussbehälter (10) einzubringenden Aufgussflüssigkeit (F) aufweist.

7. System nach Anspruch 5 oder 6, **dadurch gekennzeichnet, dass** die Zubereitungsvorrichtung eine elektronische Steuerung (190) für die Einfüllmittel (140, 160, 170) und die Auspressmittel (159) aufweist.

8. System nach Anspruch 7, **dadurch gekennzeichnet, dass** die Steuerung (190) Bedienorgane (191) aufweist, mittels welcher manuell eine gewünschte Kontaktierungsdauer zwischen Aufgusstrockensubstanz (T) und Aufgussflüssigkeit (F) im Aufgussbehälter (10) kontinuierlich oder stufenweise einstellbar ist, und dass die Steuerung (190) dazu ausgebildet ist, die Auspressmittel (150) nach Verstreichen der eingestellten Kontaktierungsdauer zu aktivieren.

9. System nach Anspruch 7 oder 8, **dadurch gekennzeichnet, dass** die Steuerung (190) Bedienorgane (191) aufweist, mittels welcher manuell eine gewünschte Menge in den Aufgussbehälter (10) einzufüllende Aufgussflüssigkeit (F) kontinuierlich oder stufenweise einstellbar ist, und dass die Steuerung (190) dazu ausgebildet ist, die eingestellte Menge Aufgussflüssigkeit (F) in den Aufgussbehälter (10) einzufüllen.

## Claims

1. A method for preparing an infusion beverage, wherein a measured quantity of a dried infusion substance (T) is brought into contact with a measured quantity of an infusion liquid (F), and the infusion beverage arises by way of this, **characterised in that** the dried infusion substance (T) is provided in an infusion container (10) which is firstly present in a collapsed shape and is expandable into an expanded shape, that the infusion liquid (F) is introduced into the infusion container (10), whereby the infusion container (10) is expanded, that the dried infusion substance (T) is kept in contact with the infusion liquid in the infusion container (10) during a contact duration for forming the infusion beverage, and that the infusion container (10) is then at least partly brought back into its collapsed shape by way of pressing together and with this the infusion beverage is at least partly expelled from the infusion container (10).

2. An infusion container for receiving a dried infusion substance for the preparation of an infusion beverage, for carrying out the method according to claim 1, wherein the infusion container is designed in a liquid-tight manner for receiving an infusion liquid (F) and is expandable from a collapsed shape into an expanded shape by way of introducing infusion liquid (F) and is provided with an outlet valve (14) which opens on exceeding an overpressure in the infusion container (10), **characterised in that** it comprises a base part (11) and a cover part (12) and an expandable wall part (13) therebetween and the outlet valve is arranged in the base part (11).

3. An infusion container according to claim 2, **characterised in that** the cover part (12) is designed such that it can be pierced.

4. An infusion container according to claims 2 or 3, **characterised in that** it consists of a food-compatible material.

5. A system for preparing an infusion drink, for carrying out the method according to claim 1, consisting of a preparation device and of an infusion container according to one of the claims 2 to 4, said infusion container being able to be inserted into the preparation device, wherein the preparation device comprises a holder (111) for the infusion container (10) containing a dried infusion substance, a reservoir (130) for an infusion liquid (F), filling means (140, 160, 170) for bringing a metered quantity of infusion liquid (F) out of the reservoir (130) into the infusion container (10), and an outlet (112) for leading prepared infusion beverage out of the infusion container (10), said outlet (112) communicating with the outlet valve (14) of the infusion container (10), wherein the filling means comprise a movably drivable filling needle (140) for piercing the infusion container (10) and wherein pressing-out means (150) are provided, these being designed to press the infusion container (10) together and by way of this the prepared infusion beverage which is located in the infusion container (10) can be emptied out of the infusion container (10) through the outlet valve (14) into the outlet (112).

6. A system according to claim 5, **characterised in that** the preparation device comprises a heating means (180) which is designed as a continuous heater, for heating the infusion liquid (F) which is to be brought into the infusion container (10).

7. A system according to claim 5 or 6, **characterised in that** the preparation device comprises an electronic control (190) for the filling means (140, 160, 170) and the pressing-out means (150).

8. A system according to claim 7, **characterised in that** the control (190) comprises operating elements (191), by way of which a desired contacting duration between the dried infusion substance (T) and the infusion liquid (F) in the infusion container (10) can be manually set continuously or in steps, and that the control (190) is designed to activate the pressing-out means (150) after the passing of the set contacting duration.

9. A system according to claim 7 or 8, **characterised in that** the control (190) comprises operating elements (191), by way of which a desired quantity of infusion liquid (F) which is to be filled into the infusion container (10) can be manually set in a continuous or stepwise manner, and that the control (190) is designed to fill the set quantity of infusion liquid (F) into the infusion container (10) .

## Revendications

1. Procédé de préparation d'une boisson à infusion, selon lequel une quantité dosée d'une matière sèche pour infusion (T) est mise en contact avec une quantité dosée d'un liquide d'infusion (F) pour créer ainsi la boisson à infusion, **caractérisé en ce que** la matière sèche pour infusion (T) est placée dans un récipient d'infusion (10) qui se présente d'abord sous une forme de taille réduite et peut être agrandi pour adopter une forme dilatée ; **en ce que** le liquide d'infusion (F) est introduit dans le récipient d'infusion (10), opération lors de laquelle le récipient d'infusion (10) est dilaté ; **en ce que** la matière sèche pour infusion (T) est maintenue en contact avec le liquide d'infusion dans le récipient d'infusion (10) pendant une durée de contact, aux fins de préparer la boisson à infusion ; et **en ce qu'**ensuite le récipient d'infusion (10) est ramené par compression au moins partiellement à sa forme réduite et que de ce fait, la boisson à infusion est expulsée au moins en partie du récipient d'infusion (10).

2. Récipient d'infusion destiné à recevoir une matière sèche pour infusion aux fins de préparer une boisson à infusion, en vue de la mise en œuvre du procédé selon la revendication 1, sachant que le récipient d'infusion est réalisé de manière étanche aux liquides, afin de recevoir un liquide d'infusion (F), et peut être dilaté par introduction d'un liquide d'infusion (F), pour passer d'une forme réduite à une forme dilatée, et est doté d'une valve de sortie (14) qui s'ouvre en cas de dépassement d'une surpression dans le récipient d'infusion (10), **caractérisé en ce qu'**il présente une partie formant fond (11) et une partie formant couvercle (12) et, entre celles-ci, une partie formant paroi (13) pouvant se déployer, et **en ce que** la valve de sortie est disposée dans la partie formant fond (11).

3. Récipient d'infusion selon la revendication 2, **caractérisé en ce que** la partie formant fond (12) est réalisée de manière à pouvoir être percée.

4. Récipient d'infusion selon la revendication 2 ou 3, **caractérisé en ce qu'**il se compose d'un matériau compatible avec les produits alimentaires.

5. Système de préparation d'une boisson à infusion, destiné à la mise en œuvre du procédé selon la revendication 1, constitué d'un dispositif de préparation et d'un récipient d'infusion, pouvant être inséré dans le dispositif de préparation, selon l'une des revendications 2 à 4, sachant que le dispositif de préparation présente un support (111) pour le récipient d'infusion (10) contenant une matière sèche pour infusion (F), un réservoir (130) pour un liquide d'infusion (F), des moyens de remplissage (140, 160, 170) pour introduire une quantité dosée de liquide d'infusion (F) dans le récipient d'infusion (10), à partir du réservoir (130), et une sortie (112) destinée à évacuer du récipient d'infusion (10) la boisson à infusion préparée, laquelle sortie (112) communique avec la valve de sortie (14) du récipient d'infusion (10), sachant que les moyens de remplissage comportent une aiguille de remplissage (140) pouvant être entraînée en déplacement et destinée à percer le récipient d'infusion (10), et qu'il est prévu des moyens de pression (150) qui sont conçus pour comprimer le récipient d'infusion (10) et permettent de ce fait d'évacuer la boisson à infusion préparée se trouvant dans le récipient d'infusion (10), pour la faire passer du récipient d'infusion (10) dans la sortie (112), à travers la valve de sortie (14).

6. Système selon la revendication 5, **caractérisé en ce que** le dispositif de préparation présente des moyens de chauffage (180) qui sont réalisés sous forme de chauffe-eau instantané et sont destinés à chauffer le liquide d'infusion (F) devant être introduit dans le récipient d'infusion (10).

7. Système selon la revendication 5 ou 6, **caractérisé en ce que** le dispositif de préparation présente une commande (190) électronique pour les moyens de remplissage (140, 160, 170) et les moyens de pression (150).

8. Système selon la revendication 7, **caractérisé en ce que** la commande (190) présente des organes de réglage (191) qui permettent de régler manuellement, de façon continue ou graduelle, une durée de contact souhaitée entre la matière sèche pour infusion (T) et le liquide d'infusion (F) dans le récipient d'infusion (10), et **en ce que** la commande (190) est conçue pour activer les moyens de pression (150) après l'écoulement de la durée de contact réglée.

9. Système selon la revendication 7 ou 8, **caractérisé en ce que** la commande (190) présente des organes de réglage (191) qui permettent de régler manuellement, de façon continue ou graduelle, une quantité souhaitée de liquide d'infusion (F) à introduire dans le récipient d'infusion (10), et **en ce que** la commande (190) est conçue pour introduire la quantité réglée de liquide d'infusion (F) dans le récipient d'infusion (10).
